(19) **Europäisches Patentamt**
**European Patent Office**
**Office européen des brevets**

(11) **EP 2 134 967 B1**

(12) **EUROPEAN PATENT SPECIFICATION**

(45) Date of publication and mention
of the grant of the patent:
**28.03.2012 Bulletin 2012/13**

(51) Int Cl.:
*F04B 49/06* (2006.01)      *H02P 6/08* (2006.01)
*F04B 35/04* (2006.01)      *H02P 27/06* (2006.01)
*H02P 29/02* (2006.01)

(21) Application number: **08723771.5**

(22) Date of filing: **27.03.2008**

(86) International application number:
**PCT/KR2008/001735**

(87) International publication number:
**WO 2008/117998 (02.10.2008 Gazette 2008/40)**

(54) **ELECTRO-COMPRESSOR AND AIR CONDITIONER HAVING THE SAME**

ELEKTROVERDICHTER UND KLIMAANLAGE DAMIT

ÉLECTRO-COMPRESSEUR ET CLIMATISEUR ÉQUIPÉ D'UN TEL ÉLECTRO-COMPRESSEUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.03.2007 KR 20070030553**

(43) Date of publication of application:
**23.12.2009 Bulletin 2009/52**

(73) Proprietor: **LG Electronics Inc.**
**Seoul 150-721 (KR)**

(72) Inventors:
• **CHOI, Jin-Ha**
**Seoul, 153-802 (KR)**
• **HWANG, il-Nahm**
**Seoul, 153-802 (KR)**
• **JEONG, Ho-Jong**
**Seoul, 153-802, (KR)**

• **CHANG, Seung-Yong**
**Seoul, 153-802, (KR)**
• **KWAK, Tae-Hee**
**Seoul, 153-802, (KR)**
• **KANG, Won-Chul**
**Seoul, 153-802, (KR)**
• **SEO, Kyung-Won**
**Seoul, 153-802, (KR)**
• **SONG, Chi-Woo**
**Seoul, 153-802, (KR)**

(74) Representative: **Vossius & Partner**
**Siebertstrasse 4**
**81675 München (DE)**

(56) References cited:
**EP-A2- 1 367 708          WO-A1-2005/103584
JP-A- 3 056 089            JP-A- 58 041 283
KR-A- 20010 110 548        KR-A- 20020 047 169
US-A- 5 682 091            US-A- 5 857 349
US-A1- 2005 247 073**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present disclosure relates to an electro-compressor using a motor. The present disclosure further relates to an air conditioner that performs heat exchange in a desired space using the electro-compressor.

## Background Art

Generally, an air conditioner is an appliance for heating and cooling an indoor space. Heat exchange is preformed by a refrigerant circulating along a refrigerant circulation loop. The refrigerant circulates along the refrigerant circulation loop in an evaporation/ compression system. A circulation amount of the refrigerant is adjusted by an electro-compressor installed on the refrigerant circulation loop.

The electro-compressor installed on the refrigerant circulation loop includes a compression unit discharging the refrigerant and a motor providing power to the compression unit. Therefore, the circulation amount of the refrigerant discharged from the compression unit varies in accordance with an RPM of the motor.

A triple-phase direct current motor or a triple-phase AC motor is usually used as the motor of the electro-compressor for adjusting a circulation amount of the refrigerant that will circulate the refrigerant circulation loop. In order to maximize the efficiency of the triple-phase motor, 3-phase voltages synchronized with a location of a rotor in the triple-phase motor must be supplied to corresponding stator windings. That is, when a phase difference between 3-phase voltages applied to the triple-phase motor maintain 120 , the efficiency of the triple-phase motor can be maximized.

The triple-phase direct current motor is driven by 3-phase square wave voltages. Contrary or Counter electromotive force is generated in the stator winding of the triple-phase direct current motor by radical change of magnetic force when the 3-phase square wave voltage is edged. The electron-compressor controls a phase of each of the 3-phase square wave voltages supplied to the triple-phase motor using the contrary electromotive force. However, in the triple-phase direct current motor, the radical magnetic force change generating the counter electromotive force causes the deformation of the stator and the generation of noise. Therefore, the use of the triple-phase direct current motor is dodged in the electro-compressor of the air conditioner.

The triple-phase AC motor is driven by 3-phase sine wave voltages. Since there is no discontinuity section in the 3-phase sine wave voltage, there is no radical magnetic force change in the stator winding of the triple-phase AC motor. Therefore, in the triple-phase AC motor, the stator is not deformed and the noise is not generated. From this perspective, the triple-phase AC motor is usually used for the electro-compressor of the air conditioner.

The electro-compressor of the air conditioner including the triple-phase AC motor controls phases of the 3-phase sine wave voltages using a current flowing along only one of the stator windings. Therefore, the electro-compressor having the triple-phase AC motor cannot accurately control the phase of each of the 3-phase sine wave voltages and cannot accurately maintain the 120 phase difference between the 3-phase sine wave voltages. As a result, the electro-compressor using the triple-phase AC motor and the air conditioner having the same cannot efficiently operate. Furthermore, the electro-compressor of the air conditioner, which depends on only one phase current detection, cannot accurately monitor an abnormal state such as a breaking down of a voltage line on which a current detecting sensor is not installed, and an over current and over load of the triple-phase AC motor. As a result, the triple-phase AC motor, the electro-compressor using the triple-phase AC motor, and the air conditioner having the electro-compressor are frequently damaged. Document EP-A-1 367 708 discloses an electro-compressor according to the preamble of claim 1.

## Disclosure of Invention

## Technical Problem

Embodiments provide an electro-compressor that can operate efficiently and an air conditioner having the same.

Embodiments also provide an electro-compressor that is not damaged by an abnormal state and an air conditioner having the same.

Technical Solution

This problem is solved by an electro-compressor according to claim 1.

The details of one or more embodiments are set forth in the accompanying drawings and the description below. Other features will be apparent from the description and drawings, and from the claims.

## Advantageous Effects

According to the present invention, the electro-compressor controls a voltage change operation of the inverter using a correlation current reflecting phase currents of the 3-phase stator windings of the motor. Therefore, the 3-phase alternating current voltages applied to the motor maintains the 120 phase difference. As a result, the electro-compressor and the air conditioner having the electro-compressor can operate with maximum efficiency. Furthermore, since the electro-compressor can accurately monitor abnormal states related with the motor using the correlation current reflecting the phase currents of the 3-phase stator windings, the damage of the electro-compressor and the air conditioner having the electro-compressor can be prevented.

## Brief Description of the Drawings

Fig. 1 is a block diagram of an air conditioner having an electro-compressor according to an embodiment.

Fig. 2 is a waveform illustrating output voltages of an inverter and a current detecting sensor of Fig. 1.

Fig. 3 is an equivalent circuit diagram of a triple alternating current motor of Fig. 1.

Fig. 4 is a detailed circuit diagram illustrating a current detecting senor, current-voltage converting unit, and control unit of Fig. 1.

## Best Mode for Carrying Out the Invention

Reference will now be made in detail to the embodiments of the present disclosure, examples of which are illustrated in the accompanying drawings. Wherever possible, the same reference numbers will be used throughout the drawings to refer to the same or like parts.

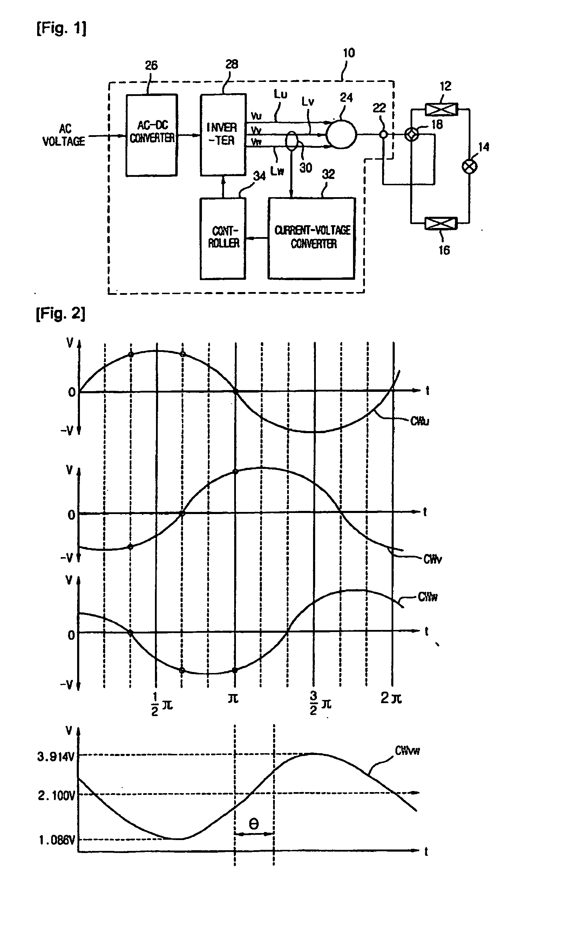

Fig. 1 is a block diagram of an air conditioner having an electro-compressor according to an embodiment.

Referring to Fig. 1, an air conditioner includes a refrigerant circulation loop (or a refrigerant system) that is formed by continuously connecting an electro-compressor 10, an outdoor heat exchanger 12, an expansion valve (or electro-expansion valve) 14, and an indoor heat exchanger 16. The refrigerant circulation loop may includes a cross-shaped switch valve 18 connected between the outdoor heat exchanger 12 and the indoor heat exchanger 16. The cross-shaped switch valve 18 connects a refrigerant inlet of the electro-compressor 10 to one of the outdoor and indoor heat exchangers 12 and 16 and connects a refrigerant outlet of the electro-compressor 10 to the other of the outdoor and indoor heat exchangers 12 and 16. That is, the refrigerant is directed from the outlet of the electro-compressor 10 to one of the outdoor and indoor heat exchangers 12 and 16 in accordance with a switching state of the cross-shaped switch valve 18, there by realizing one of the cooling or heating modes.

In the cooling mode of the air conditioner, the cross-shaped switch valve 18 is switched as shown by a solid line in Fig. 1 and the outlet of the compression unit 22 of the electro-compressor 10 is connected to the outdoor heat exchanger 12. Therefore, the refrigerant discharged from the compression unit 22 of the electro-compressor 10 passes through the outdoor heat exchanger 12, is expanded in a reduced pressure at the expansion valve 14, and then is returned to the compression unit 22 via the indoor heat exchanger 16. In this case, the outdoor heat exchanger 12 functions as a condenser and the indoor heat exchanger 16 functions as an evaporator. As a result, the refrigerant circulation loop cools down air in an indoor space where the air conditioner is installed.

When the air conditioner is driven in the heating mode, the cross-shaped switch valve 18 is switched as shown by a dotted line in Fig. 1. Then, the outlet of compression unit 22 of the electro-compressor 10 is connected to the indoor heat exchanger 16. The refrigerant discharged from the compression unit 22 of the electro-compressor 10 passes through the indoor heat exchanger 16, is expanded in the reduced pressure at the expansion value 14, and then is returned to the compression unit 22 via the outdoor heat exchanger 12. The indoor heat exchanger 16 functions as the condenser and the outdoor heat exchanger 12 functions as the evaporator. Accordingly, the refrigerant circulation loop heats up air in the indoor space where the air conditioner is installed. Consequently, as the refrigerant is forwardly or reversely circulated in the refrigerant circulation loop so that the air in the indoor space may be cooled down or heated up.

The electro-compressor 10 includes a motor 24, an inverter 28, and an AC-to-direction current (AC-DC) converter 26 that form a series circuit together with the compression unit 22. The compression unit 22 increases or decreases an amount of the refrigerant discharged toward the outdoor or indoor heat exchanger 12 or 16 via the cross-shaped switch valve 18, thereby adjusting a cooling or heating speed of the air in the indoor space.

The AC-DC converter 26 performs rectification and smooth operations for a commercial AC (hereinafter, AC) voltage (110V or 220V) so that the AC voltage into the direct current (hereinafter, DC) voltage. The AC-DC converter 26 outputs the DC voltage of a predetermined level (e.g., 220V direct current voltage).

The inverter 28 switches the DC voltage output from the AC-DC converter 26 to generate sine wave 3-phase AC voltages. The 3-phase AC voltages output from the inverter 28 include a U-phase AC voltage Vu, a V-phase AC voltage Vv, and a W-phase AC voltage Vw. The U, V, and W-phase AC voltages Vu, Vv, and Vw are generated maintaining a 120° (i.e., 2 /3) phase difference from one another. When it is assumed that the U-phase AC voltage Vu has a phase of 0° as shown by CWu in Fig. 2, the V-phase AC voltage Vv has a delayed phase of 120° with respect to the phase of the U-phase AC voltage Vu as shown by CWv in Fig. 2 and the W-phase AC voltage Vw has a delayed phase of 240° with respect to the phase of the U-phase AC voltage Vu as shown by CWw in Fig. 2. The periods of the U, V, and W-phase AC voltages Vu, Vv, and Vw increase or increase in inverse proportional to an amount of the refrigerant that will be circulated in the refrigerant circulation loop.

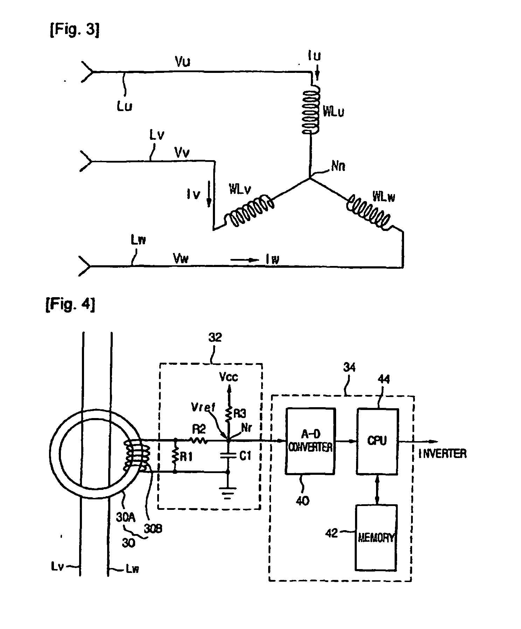

The motor 24 includes a stator (not shown) installed encircling a rotor (not shown). A rotational shaft connected to the compression unit 22 is installed on the rotor. A U-phase stator winding WLu, a V-phase stator winding WLv, and a W-phase stator winding WLw are wound around the stator to form a Y-connection as shown in Fig. 3. The U, V, and W-phase stator windings WLu, WLv, and WLw have respective first ends connected to the inerter 28 to receive corresponding phase AC voltage from the inverter 28. The U, V, and W-phase stator windings WLu, WLv, and WLw have respective second ends that are commonly interconnected to form a neutral node Nn. Sum of the currents at the neutral node Nn becomes 0 as shown in the following Math Figure 1 according to Kirchhoffs Law.

### <Math Figure 1>

$$Iu + Iv + Iw = 0$$

Also, in the case where square wave AC voltages having a predetermined phase are applied to the U, V, and W-phase stator windings WLu, WLv, and WLw, a current given by Math Figure 2 flows through the U, V, and W-phase stator windings WLu, WLv, and WLw. In Math Figure 2, Im is a maximum instantaneous current.

### <Math Figure 2>

$$Iu = Im \, Cos \, wt$$
$$Iv = Im \, Cos \, (wt - 2\pi/3)$$
$$Iw = Im \, Cos \, (wt + 2\pi/3)$$

The triple-phase AC motor 24 adjusts an RPM of the rotor in accordance with a frequency of the 3-phase AC voltages. The torque of the rotor is transmitted to the compression unit via the rotational shaft. The compression unit 22 adjusts the amount of the refrigerant that will be discharged to the indoor or outdoor heat exchanger 12 or 16 in accordance with an intensity of the torque, thereby adjusting the cooing or heating speed. An induction motor, a brushless DC (BLDC) motor, or an LCDC motor may be used as the triple-phase AC motor.

The electro-compressor 10 includes current detecting sensor 30 installed on two of the 3-phase voltage lines Lu, Lv, and Lw, a current-to-voltage (hereinafter, current-voltage) converter 32 and a controller 34 connected in series between the current detecting sensors 30 and the inverter 28. The current detecting sensors 30, as shown in Fig. 4, includes a ring-shaped core 30A through which the V-phase voltage line Lv and the W-phase voltage line Lw pass and a detecting coil 30B wound around at least a part of the ring-shaped core 30A. A current that varies continuously in accordance with the variation of the magnetic force generated by the currents flowing along the V and W-phase voltage lines Lv and Lw. The current induced to the detecting coil 30B of the current detecting sensor 30, as shown by CWvw in Fig. 2, has a period identical to a waveform CWu of the U-phase AC voltage Vu and has a delayed phase by $\pi+\theta$ (i.e., 180°+ θ). Here, the angle of θ indicates a phase of the correlation current component induced to the stator windings by the variation of magnetic force depending on the reactance components between the stator windings WLu, WLv and WLw of Y-connection and the rotation of the rotor, in reference to the phase of the U-phase AC voltage Vu. The angle of 180° is a phase of correlation current component delayed by the correlation action or operation or affection between the V-phase and W-phase AC voltages, in reference to the U-phase AC voltage Vu. The correlation current reflects the currents flowing along the 3-phase stator windings WLu, WLv, and WLw of the motor 24. That is, the correlation current varies in a phase when there is a breaking down in any one of the 3-phase stator windings Wlu, WLv, and WLw or when an over load or over current is applied to the any one of the 3-phase stator windings Wlu, WLv, and WLw.

The current-voltage converter 32 converts the VW correlation current induced to the detecting coil 30B of the current detecting sensor 30 into a voltage and level-shifts the converted voltage by a reference voltage Vref to output a correlation current detecting signal. The correlation current detecting signal output from the current-voltage converter 32, as shown by CWvw in Fig. 2, changes within a predetermined voltage range (e.g., ±1.014 V) with reference to the reference voltage Vref (e.g., 2,100V).

The current-voltage converter 32, as shown in Fig. 4, includes a first resistor R1 connected to the detecting coil 30B of the current detecting sensor 30 in parallel, a second resistor R2 connected to the first end of the detecting coil 30B and a reference node Nr, a third resistor R3 connected between a DC voltage source Vcc and the reference node Nr, and a capacitor C1 connected between the reference node Nr and the second end of the detecting coil 30B. The first, second, and third resistors R1, R2, and R3 set the reference voltage Vref of a predetermined level on the reference node Nr by dividing the DC voltage Vcc. The reference voltage Vref is set by multiplying the DC voltage Vcc to a ratio between a sum of first and second resistances and a sum of first to third resistances. The capacitor performs selectively the charge and discharge of electric charges so that the correlation current detecting signal can appear on the reference node Nr. At this point, in order to limit an amount of the current flowing along the capacitor C 1 and lower a charging voltage, the first resistor R1 has a significantly lower value than that of the second resistor R2. For example, the value of the first resistor R1 is 1% or less of the value of the second resistor R2.

The controller 34 detects a position of the rotor in the motor 24 using the correlation current detecting signal from the current-to-voltage converter 32 and supplies the U, V, and W-phase control signals synchronized with the position of the rotor to the inverter 28. In addition, the controller 34 monitors an abnormal state related to the motor 24 using an amount of the phase delay of the correlation current detecting signal. When there is an abnormal state of the motor 24 (e.g., when there is a breaking down of the current voltage line or an over load or over current in the motor 30), the control unit 34 stops the voltage converting operation of the inverter 28.

For example, where there is a breaking down of the U-phase voltage line Lu, the correlation current detecting signal will has a waveform that is more delayed by θ than that of the U-phase AC voltage Vu indicated by CWu in Fig. 2. This results from that the current Iu flowing along the U-phase stator winding WLu becomes 0. On the other hand, when there is a breaking down of one of the V and W-phase voltage lines Lv and Lw, the correlation current detecting signal will has a waveform that is more delayed by θ than that of the W-phase AC voltage Vw indicated by CWw in Fig. 2 or a waveform that is more delayed by θ than that of the V-phase AC voltage Vv indicated by CWv in Fig. 2. This results from that the currents flowing along the V and W-phase stator winding WLv and WLw become 0. Furthermore, when an over load or over current is applied to the motor 24, one of the currents flowing along the U, V, and W-phase voltage lines Lu, Lv, and Lw becomes 0, thereby generating the correlation current detecting signal having the waveform that is similarly delayed to a case where any one of the U, V, and W-phase voltage lines Lu, Lv, and Lw is broken down. Therefore, θ that is a phase delay width may be set to be less than 40° That is, when the phase change width of the correlation current detecting signal is greater than 40° the controller 34 determines that an abnormal state occurs in the motor.

The controller 34 controls the voltage converting operation of the inverter 28 using the correlation current reflecting the currents flowing along the 3-phase stator windings WLu, WLv, and WLw of the motor from the two of the 3-phase voltage lines. Accordingly, the 3-phase AC voltages supplied to the motor 24 can accurately maintain the 120° phase difference. As a result, the electro-compressor 10 and the air conditioner having the electro-compressor 10 can operate with maximum efficiency. Furthermore, since the abnormal state related to the motor can be accurately monitored, the damage of the electro-compressor 10 and the air conditioner having the same can be prevented.

In order to perform the above-described functions, as shown in Fig. 4, the controller 34 includes an analog-to-digital (A-D) converter that is connected in series between the reference node Nr and the inverter 28, a central process unit (CPU) 44, and a memory 42 connected to the CPU 44. The A-D converter 40 converts the correlated current detecting signal output fro the reference node Nr of the current-to-voltage converter 32 into digital data. The memory 42 may be a nonvolatile memory such as an EEPROM and an SRAM that can store the data even when power is turned off and update the data. The CPU 42 detects if there is an abnormal state related to the motor 24 and the position of the rotor in the motor 24 using the correlation current detecting data from the A-D converter 40. The CPU 42 supplies U, V, and W-phase control signals synchronized with the position of the rotor to the inverter 28. In addition, where there is an abnormal state related to the motor 24, the CPU 42 initializes the U, V, and W-phase control signals supplied to the inverter 28 using an amount of phase delay of the correlation current detecting data to stop the voltage converting operation of the inverter 28. At this point, the motor 24 stops rotating to quit the discharge of the refrigerant from the compression unit 22, thereby stopping the refrigerant circulation in the refrigerant circulation loop.

According to the above embodiments, the electro-compressor controls a voltage conversion of the inverter using a correlation current reflecting phase currents of the 3-phase stator windings of the motor. Therefore, the 3-phase AC voltages applied to the motor maintain the 120 phase difference from one another. As a result, the electro-compressor and the air conditioner having the same can operate with maximum efficiency. Furthermore, since the electro-compressor can accurately monitor abnormal states related with the motor using the correlation current reflecting the phase currents of the 3-phase stator windings, the damage of the electro-compressor and the air conditioner having the same can be prevented.

## Industrial Applicability

The electro-compressor and the air conditioner having the electro-compressor can operate with the maximum efficiency by controlling the voltage converting operation of the inverter using the correlation current of the 3-phase stator windings of the motor. Therefore, the industrial applicability of the present invention is sufficient.

## Claims

1. An electro-compressor comprising:

   a compression unit;
   a triple-phase motor (24) providing power to the compression unit;
   an inverter( 28) generating 3-phase AC voltages required for the triple-phase motor using a direct current voltage;
   a controller (34) controlling a voltage converting operation of the inverter;
   a current detecting sensor (30) detecting a correlation current from two of 3-phase voltage lines along which the 3-phase AC voltages are transmitted from the inverter to the motor; and
   the controller (34) adjusts phases of the 3-phase AC voltages by controlling a voltage converting operation of the inverter using the correlation current from the current detecting sensor;
   an analog-to-digital converter (40) converting the correlation current signal from a current-to-voltage converter (32) into digital data; and
   a calculation unit (44) controlling the voltage converting operation of the inverter (28) using the correlation current data from the analog-to-digital converter;

**characterized in that** the calculation unit (44) controls the inverter such that the chases of the 3-phase voltages can be adjusted in accordance with delay of the correlation current with respect to a non-detecting phase voltage;

wherein the calculation unit (44) determines if an abnormal state occurs in accordance with whether the delay of the correlation current with respect to a non-detecting phase voltage is out of a critical range.

and/or a phase change width of the correlation is greater than 40°

2. The electro-compressor according to claim 1, wherein the current detecting sensor (30) detects the correlation current from lines transmitting V and W-phase alternating voltages.

3. The electro-compressor according to claim 2, the current detecting sensor (30) comprises:

   a circular core (30A) encircling the V and W-phase voltage lines; and
   a detecting winding (30B) wound around at least a portion of the circular core.

4. The electro-compressor according any one of claims 1 to 3, further comprising a current-to-voltage converter (32) that is connected between the current detecting sensor (30) and the controller (34) to convert the correlation current into a voltage signal.

5. The electro-compressor according to claim 4, wherein the current-to-voltage converter (32) includes a level shifter shifting a level of the correlation voltage.

6. The electro-compressor according to any of claims 31 to 5, wherein the critical range is about 140- 220°.

7. The electro-compressor according to any one of claims 1 to 6, wherein the motor (24) is selected from the group consisting of an induction motor, a brushless direction current motor, and an LCDC motor.

8. The electro-compressor according to any one of claims 1 to 7, wherein the compression unit (22) is on a refrigerant circulation loop to compress and discharge refrigerant.

**Patentansprüche**

1. Elektrokompressor, der aufweist:

   eine Kompressionseinheit;

   einen Drehstrommotor (24), der Leistung an die Kompressionseinheit liefert;
   einen Wechselrichter (28), der für den Drehstrommotor benötigte Drehstrom-Wechselspannungen mittels einer Gleichspannung erzeugt;
   eine Steuereinrichtung (34), die einen Spannungsumwandlungsbetrieb des Wechselrichters steuert;
   einen Stromdetektionssensor (30), der einen Korrelationsstrom von zwei der Drehstromspannungsleitungen detektiert,
   längs derer die Drehstrom-Wechselspannungen vom Wechselrichter zum Motor übertragen werden; und
   die Steuereinrichtung (34) die Phasen der Drehstrom-Wechselspannungen justiert, indem sie einen Spannungsumwandlungsbetrieb des Wechselrichters unter Verwendung des Korrelationsstroms aus dem Stromdetektionssensor steuert;
   einen Analog-Digital-Wandler (40), der das Korrelationsstromsignal aus einem Strom-Spannungs-Wandler (32) in digitale Daten umwandelt; und
   eine Recheneinheit (44), die den Spannungsumwandlungsbetrieb des Wechselrichters (28) unter Verwendung der Korrelationsstromdaten aus dem Analog-Digital-Wandler steuert;
   **dadurch gekennzeichnet, dass** die Recheneinheit (44) den Wechselrichter so steuert, dass die Phasen der Drehstrom-Spannungen entsprechend einer Verzögerung des Korrelationsstroms bezüglich einer Nichtdetektionsphasenspannung justiert werden können;
   wobei die Recheneinheit (44) feststellt, ob ein anormaler Zustand auftritt, entsprechend dessen, ob die Verzögerung des Korrelationsstrom bezüglich einer Nichtdetektionsphasenspannung außerhalb eines kritischen Bereichs liegt; und/oder eine Phasenänderungsbreite der Korrelation größer als 40° ist.

2. Elektrokompressor nach Anspruch 1, wobei der Stromdetektionssensor (30) den Korrelationsstrom von Leitungen detektiert, die V- und W-Phasenwechselspannungen übertragen.

3. Elektrokompressor nach Anspruch 2, wobei der Stromdetektionssensor (30) aufweist:

   einen kreisförmigen Kern (30A), der die V- und W-Phasenspannungsleitungen umgibt; und
   eine Detektionswicklung (30B), die um mindestens einen Abschnitt des kreisförmigen Kerns gewickelt ist.

4. Elektrokompressor nach einem der Ansprüche 1 bis 3, der ferner einen Strom-Spannungs-Wandler (32) aufweist, der zwischen den Stromdetektionssensor (30) und die Steuereinrichtung (34) geschaltet ist, um den Korrelationsstrom in ein Spannungssignal umzuwandeln.

5. Elektrokompressor nach Anspruch 4, wobei der Strom-Spannungs-Wandler (32) einen Pegelschieber aufweist, der einen Pegel der Korrelationsspannung verschiebt.

6. Elektrokompressor nach einem der Ansprüche 1 bis 5, wobei der kritische Bereich etwa 140-220° beträgt.

7. Elektrokompressor nach einem der Ansprüche 1 bis 6, wobei der Motor (24) aus der Gruppe ausgewählt ist, die aus einem Induktionsmotor, einem bürstenlosen Gleichstrommotor und einem LCDC-Motor besteht.

8. Elektrokompressor nach einem der Ansprüche 1 bis 7, wobei sich die Kompressionseinheit (22) in einem Kältemittelumwälzkreislauf befindet, um ein Kältemittel zu komprimieren und auszustoßen.

## Revendications

1. Compresseur électrique comprenant :

une unité de compression ;
un moteur triphasé (24) fournissant une puissance à l'unité de compression ;
un onduleur (28) générant des tensions alternatives triphasées requises par le moteur triphasé en utilisant une tension continue ;
un dispositif de commande (34) commandant une opération de conversion de tension de l'onduleur ;
un détecteur de courant (30) détectant un courant de corrélation à partir de deux des lignes de tensions triphasées le long desquelles les tensions alternatives triphasées sont transmisses de l'onduleur jusqu'au moteur ; et
le dispositif de commande (34) ajuste les phases des tensions alternatives triphasées en commandant une opération de conversion de tension de l'onduleur en utilisant le courant de corrélation provenant du détecteur de courant ;
un convertisseur analogique-numérique (40) convertissant le signal de courant de corrélation provenant d'un convertisseur courant-tension (32) en données numériques ; et
une unité de calcul (44) commandant l'opération de conversion de tension de l'onduleur (28) en utilisant les données de courant de corrélation provenant du convertisseur analogique-numérique ;

**caractérisé en ce que** l'unité de calcul (44) commande l'onduleur de sorte que les phases des tensions triphasées puissent être ajustées en fonction d'un retard du courant de corrélation par rapport à une tension de phase non détectée ;
dans lequel l'unité de calcul (44) détermine si un état anormal apparaît en fonction du fait que le retard du courant de corrélation par rapport à une tension de phase non détectée est ou non en dehors d'une plage critique, et/ou du fait qu'une largeur de déphasage de la corrélation est ou non supérieure à 40°.

2. Compresseur électrique selon la revendication 1, dans lequel le détecteur de courant (30) détecte le courant de corrélation à partir de lignes transmettant des tensions alternatives de phase V et de phase W.

3. Compresseur électrique selon la revendication 2, dans lequel le détecteur de courant (30) comprend :

un noyau circulaire (30A) encerclant les lignes de tension de phase V et de phase W ; et
un enroulement de détection (30B) enroulé autour d'au moins une portion du noyau circulaire.

4. Compresseur électrique selon l'une quelconque des revendications 1 à 3, comprenant un convertisseur courant-tension (32) raccordé entre le détecteur de courant (30) et le dispositif de commande (34) pour convertir le courant de corrélation en un signal de tension.

5. Compresseur électrique selon la revendication 4, dans lequel le convertisseur courant-tension (32) inclut un dispositif de décalage de niveau décalant un niveau de la tension de corrélation.

6. Compresseur électrique selon l'une quelconque des revendications 1 à 5, dans lequel la plage critique est comprise entre environ 140° et 220°.

7. Compresseur électrique selon l'une quelconque des revendications 1 à 6, dans lequel le moteur (24) est choisi dans le groupe composé d'un moteur asynchrone, d'un moteur à courant continu sans balai, et d'un moteur LCDC.

8. Compresseur électrique selon l'une quelconque des revendications 1 à 7, dans lequel l'unité de compression (22) est sur une boucle de circulation de réfrigérant pour comprimer et décharger le réfrigérant.

[Fig. 1]

[Fig. 2]

[Fig. 3]

[Fig. 4]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1367708 A